# EUROPÄISCHE PATENTANMELDUNG

(11) **EP 1 942 287 A1**
(43) Veröffentlichungstag der Anmeldung: **09.07.2008**
(21) Anmeldenummer: 07120482.0
(22) Anmeldetag: 12.11.2007
(51) Int. Cl.: F16D 65/00

(54) **Bremsstaubaufnahmevorrichtung für Kraftfahrzeuge**

(30) Priorität: 08.01.2007 DE 202007000244 U
(71) Anmelder: MANN+HUMMEL GmbH, 71638 Ludwigsburg (DE)
(72) Erfinder: Jessberger, Thomas, 71679, Asperg (DE); Wein, Michael, 70376, Stuttgart (DE); Frank, Michael, 71636, Ludwigsburg (DE)

(57) **Zusammenfassung**

Eine Bremsstaubaufnahmevorrichtung für Kraftfahrzeuge umfasst ein Venturi-Rohr als Luftstromerzeugungseinrichtung, in dem ein Unterdruck erzeugbar ist, der einem Filterelement zuzuführen ist.

## Beschreibung

### Technisches Gebiet

Die Erfindung bezieht sich auf eine Bremsstaubaufnahmevorrichtung für Kraftfahrzeuge nach dem Oberbegriff des Anspruches 1.

### Stand der Technik

In der DE 196 43 869 C2 wird eine Bremsstaubaufnahmevorrichtung für Kraftfahrzeuge beschrieben, die zur Absaugung von Bremsstaub eingesetzt wird, welcher beim Bremsen eines Fahrzeuges als Abrieb des Bremsbelages entsteht, der unter Druck an die Bremsscheibe angelegt wird. Die Absaugvorrichtung erzeugt einen Luftstrom, der über die Bremsenteile geführt wird und den Bremsstaub in einen Sammelbehälter transportiert, in welchem sich der Bremsstaub ablagern kann. Der Sammelbehälter wird mit einem Unterdruck beaufschlagt, um die gewünschte Luftströmung zu erzeugen. Dieser Unterdruck wird in einem Venturi-Rohr, das dem Fahrtwind ausgesetzt ist, dadurch erzeugt, dass der durch das Venturi-Rohr strömende Fahrtwind in dem sich diffusorförmig erweiternden Rohr einen Unterdruck erzeugt, der über eine Saugleitung zu dem Sammelbehälter gelangt.

Hierbei ist in Betracht zu ziehen, dass versehentlich der Bremsstaub durch die Wirkung des Unterdrucks aus dem Sammelbehälter über die Saugleitung in das Venturi-Rohr geleitet werden kann, aus dem der Bremsstaub in die Atmosphäre entlassen wird.

### Offenbarung der Erfindung

Der Erfindung liegt die Aufgabe zugrunde, mit einfachen konstruktiven Maßnahmen eine wirkungsvolle Bremsstaubaufnahmevorrichtung für Kraftfahrzeuge zu schaffen.

Diese Aufgabe wird erfindungsgemäß mit den Merkmalen des Anspruches 1 gelöst. Die Unteransprüche geben zweckmäßige Weiterbildungen an.

Die erfindungsgemäße Bremsstaubaufnahmevorrichtung dient zur Aufnahme und Ablagerung von Bremsstaub, der in Bremsteilen einer Fahrzeug-Radbremse erzeugt wird. Hierzu wird der Bremsstaub in einem Luftstrom von seinem Entstehungsort zu einem Filterelement geleitet, an dem der die Bremspartikel enthaltende Luftstrom einer Filtration unterzogen wird. Stromab des Filterelements wird der gereinigte Luftstrom abgeleitet. Da der Luftstrom die an der Bremsung beteiligten Bremsteile überstreicht, wird zugleich eine zusätzliche Kühlung erzielt. Außerdem wird eine unerwünschte Ablagerung des Bremsstaubes an der Radfelge oder sonstigen Fahrzeugbauteilen vermieden, die ansonsten zu einer unerwünschten optischen Beeinträchtigung und gegebenenfalls auch zu einer Funktionsbeeinträchtigung von Fahrzeugteilen führen würde.

Der Luftstrom zum Abtransport des Bremsstaubes wird über eine Luftstromerzeugungseinrichtung erzeugt, die einen Kanal mit entlang der Hauptströmung geeignet variiertem Strömungsquerschnitt umfasst, in welchem ein Unterdruck nach dem Venturi-Prinzip erzeugbar ist, wobei in dem Venturi-Rohr in dem sich zunächst verengenden und anschließend erweiternden Kanal ein Unterdruck erzeugt wird. Dieser Unterdruck wird der Reinseite des Filterelementes zugeführt, so dass zwischen Rohseite und Reinseite des Filterelementes ein Druckabfall entsteht, der den Luftstrom zur Durchströmung des Filterelementes zwingt. Da der Unterdruck auf der Reinseite des Filterelementes anliegt, besteht keine Gefahr eines unerwünschten Bremsstaubeintrages in das Venturi-Rohr und einer Ausleitung in die Atmosphäre.

In das Venturi-Rohr wird insbesondere der Fahrtwind des Kraftfahrzeugs eingeleitet, so dass keine zusätzliche Energie zur Erzeugung des Unterdrucks aufgewandt werden muss. Der den Venturi-Kanal durchströmende Fahrtwind erzeugt insbesondere im Übergangsbereich zwischen dem konvergenten Kanalabschnitt (Düse) und dem divergenten Kanalabschnitt (Diffusor) einen Unterdruck, der über eine Kommunikationsverbindung der Reinseite des Filterelementes zugeführt wird. Der Fahrtwind verlässt über die Ausgangsöffnung wieder das Venturi-Rohr.

Gemäß zweckmäßiger Weiterbildung liegt die Reinseite des Filterelementes in einem umschlossenen Reinraum, der über mindestens eine Strömungsverbindung mit dem Venturi-Rohr kommuniziert. Einen Reinraum vorzusehen bietet den Vorteil einer gleichmäßigen Druckausbreitung des Unterdrucks auf der gesamten Reinseite des Filterelementes, wodurch eine gleichmäßige Durchströmung des Filterelementes unterstützt wird. Aufgrund der Volumenbegrenzung durch das Gehäuse des Reinraumes genügt eine verhältnismäßig geringe Luftstromabsaugung aus dem Reinraum, um den Unterdruck einzustellen, der für die Erzeugung des Luftstromes erforderlich ist.

Es kann vorteilhaft sein, eine Schalteinrichtung zur Einstellung des dem Filterelement zuzuführenden Unterdrucks vorzusehen. Diese Schalteinrichtung reguliert zweckmäßigerweise den Luftstrom durch das Venturi-Rohr und ist insbesondere als Schwenkklappe an dem Venturi-Rohr ausgebildet. Über die Einstellung dieser Schwenkklappe im Venturi-Rohr wird der Luftmassenstrom des Fahrtwindes durch das Rohr reguliert, wobei im Falle einer Absperrung oder Reduzierung des Luftstromes kein bzw. nur ein geringerer Unterdruck in dem sich diffusorförmig erweiternden Abschnitt des Venturi-Rohres erzeugt wird. Möglich ist aber auch eine Schalt- bzw. Absperreinrichtung außerhalb des Venturi-Rohrs, insbesondere in der Strömungsverbindung zwischen Venturi-Rohr und dem Reinraum auf der Reinseite des Filterelementes. Desweiteren kann ein zusätzliches Unterdruckreservoir zur Speicherung mit einem Ventil zum Absaugorgan (Venturikanal) in Verbindung mit einem elektrischen Umschaltventil (EUV) zur Aktivierung der Absaugung bei Betätigung der Bremsen vorgesehen sein.

Eine Schalteinrichtung vorzusehen, bietet den weiteren Vorteil, dass die Schalteinrichtung in Abhängigkeit aktueller Zustands- und Betriebsgrößen eingestellt werden kann. Dies eröffnet die Möglichkeit, die Schalteinrichtung während eines Bremsvorganges in eine öffnende Position zu schalten, woraufhin im Venturi-Rohr ein Unterdruck erzeugt wird, der der Reinseite des Filterelementes zugeführt wird. In dieser Ausführung wird ein den Bremsstaub abtransportierender Luftstrom nur während des Bremsvorganges erzeugt, also nur während der Entstehung des Bremsstaubes.

Grundsätzlich ist die Erzeugung des Unterdruckes mithilfe des Venturi-Rohres ausreichend, um eine den Bremsstaub abtransportierende Luftströmung durch das Filterelement zu erzeugen. Gleichwohl kann es zweckmäßig sein, als zusätzliche Luftstromerzeugungseinrichtung mindestens eine rotierbare Lüfterschaufel vorzusehen, die insbesondere auf der Innenseite der Radfelge bzw. eines mit der Radfelge drehfest gekoppelten Bauteils angeordnet ist. Während des Bremsvorganges gerät die Lüfterschaufel in Rotation und erzeugt aufgrund ihres strömungsgünstigen Profils einen Luftstrom in Richtung auf das Filterelement. Die Lüfterschaufel kann drehfest mit der Radfelge gekoppelt sein, was den Vorteil einer einfachen Ausführung aufweist, wobei in diesem Fall die Drehung der Radfelge automatisch auch eine Drehung der Lüfterschaufel zur Folge hat. Gemäß einer alternativen Ausführung ist die Lüfterschaufel drehbar gelagert und kann gegenüber der Radfelge eine Relativdrehung ausführen. Zur Realisierung der Relativdrehung ist die Lüfterschaufel zweckmäßig Bestandteil eines Lüfterrades, welches einen Lüfterring mit den daran angeordneten Lüfterschaufeln umfasst. Bei sehr geringen Geschwindigkeiten kann der Venturi-Unterdruck durch eine elektrische Absaugung unterstützt werden.

Die Bremsstaubaufnahmevorrichtung wird in einem Kraftfahrzeug eingesetzt, um den Bremsstaub der Radbremsen zu leiten. Die Luftströmung durch das Venturi-Rohr wird insbesondere über den Fahrtwind des Fahrzeuges generiert, wobei die Strömungsöffnung des Venturi-Rohrs mit einer Luftzufuhreinrichtung verbunden ist, über die der Fahrtwind entweder von der Vorderseite oder vom Unterboden des Fahrzeuges dem Venturi-Rohr zuzuführen ist. Hierbei ist jedoch zu beachten, dass im Falle lenkbarer Räder die Bremsstaubaufnahmevorrichtung ihre Relativposition zur Fahrzeugkarosserie ändert. Diese Drehlageänderung kann über die Trennung zwischen Luftzufuhreinrichtung und Venturi-Rohr berücksichtigt werden, dergestalt, dass das Venturi-Rohr und die Luftzufuhreinrichtung zueinander verschwenkbar ausgebildet sind, so dass das Venturi-Rohr gemeinsam mit dem betreffenden Rad die Lenkbewegungen ausführt, wohingegen die Luftzufuhreinrichtung fest mit der Fahrzeugkarosserie verbunden ist. Um eine Strömungsüberleitung zwischen der Luftzufuhreinrichtung und dem Venturi-Rohr sicherzustellen, sind diese beiden Bauteile vorteilhaft über einen Faltenbalg miteinander verbunden, der aufgrund seiner nachgiebigen Wandungen in der Lage ist, die Lenkbewegungen zu kompensieren. Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine Bremsstaubaufnahmevorrichtung in einem Kraftfahrzeug, bestehend aus einem Filterelement, welches karosseriefest auf einem Radlagerträger gehalten und von einer Radfelge umgriffen ist sowie einem Venturi-Rohr auf der Reinseite des Filterelementes zur Erzeugung eines Unterdruckes, so dass Bremsstaub, welcher von der Fahrzeugbremse stammt, in einer Luftströmung auf das Filterelement geleitet wird,
Fig. 2 in Seitenansicht das Venturi-Rohr, welches vom Fahrtwind des Fahrzeuges durchströmt wird, mit dem Filterelement, dessen Reinseite über eine Strömungsleitung mit dem sich diffusorförmig erweiternden Abschnitt des Venturi-Rohres verbunden ist,
Fig. 3 eine Fig. 1 entsprechende Darstellung einer Bremsstaubaufnahmevorrichtung mit einem Filterelement im Bereich einer Radfelge und einem Venturi-Rohr auf der Reinseite des Filterelementes, jedoch mit einer zusätzlichen, als Schwenkklappe ausgeführten Schalteinrichtung zur Regulierung des Luftstromes durch das Venturi-Rohr,
Fig. 4 das Venturi-Rohr mit der Schwenkklappe in einer Seitenansicht,
Fig. 5 ein weiteres Ausführungsbeispiel einer Bremsstaubaufnahmevorrichtung, bei der die Reinseite des Filterelementes unmittelbar mit dem sich diffusorförmig erweiternden Abschnitt des Venturi-Rohrs verbunden ist,
Fig. 6 eine Fig. 5 entsprechende Darstellung einer Bremsstaubaufnahmevorrichtung, jedoch mit einem zusätzlichen, in der Radfelge drehbar gelagerten Lüfterring mit Lüfterschaufeln zur Erzeugung und Unterstützung eines Luftstromes, der zum Filterelement gelenkt ist,
Fig. 7 in Seitenansicht der Frontbereich eines Kraftfahrzeugs mit einer Lufteinströmung in ein Venturi-Rohr im Bereich des Unterbodens,
Fig. 8 eine weitere Darstellung des Frontbereiches eines Kraftfahrzeugs mit einer Lufteinströmung in das Venturi-Rohr über den Fahrzeugfrontbereich,
Fig. 9 ein weiteres Ausführungsbeispiel einer Bremsstaubaufnahmevorrichtung, deren Venturi-Rohr eine Luftzufuhreinrichtung vorgeschaltet ist, wobei Venturi-Rohr und Luftzufuhreinrichtung zueinander verschwenkbar ausgebildet sind,
Fig. 10 eine der Fig. 9 entsprechende Bremsstaubaufnahmevorrichtung, jedoch mit einem Faltenbalg als Verbindung zwischen der Luftzufuhreinrichtung und dem Venturi-Rohr.

In den Figuren sind gleiche Bauteile mit den gleichen Bezugszeichen versehen.

### Ausführungsform(en) der Erfindung

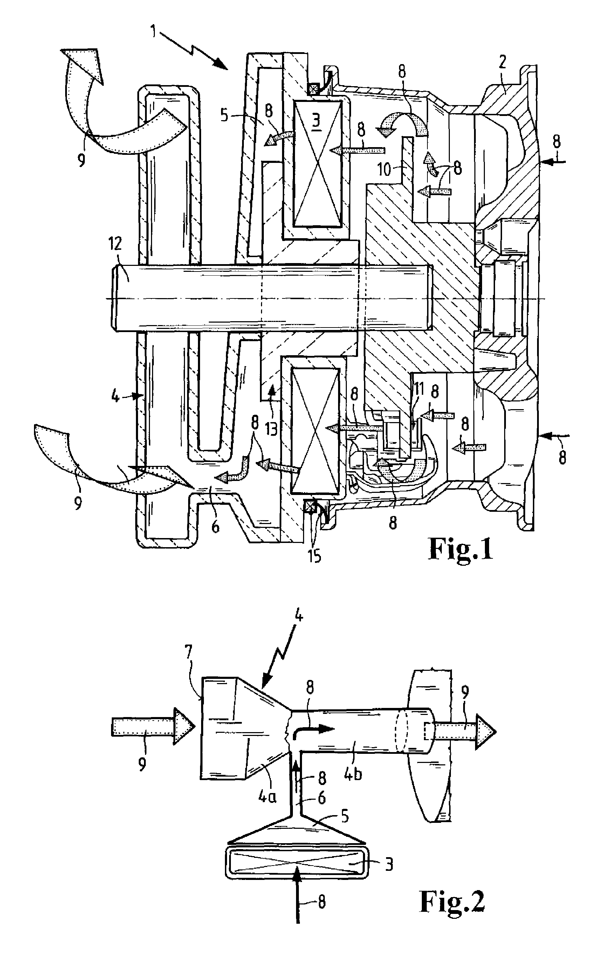

Die in Fig. 1 dargestellte Bremsstaubaufnahmevorrichtung 1 dient dazu, Bremsstaub abzuleiten, der bei Betätigung der Fahrzeug-Radbremse dadurch entsteht, dass Bremsbeläge 11 an eine rotierende Bremsscheibe 10 mit Druck angelegt werden und hierbei ein Abrieb entsteht. Die Bremsscheibe 10 befindet sich im Inneren einer Radfelge 2 und ist fest mit dieser verbunden; Bremsscheibe 10 und Radfelge 2 sind an einer Radachse 12 angeordnet und drehen mit dieser um.

Um zu vermeiden, dass sich der Bremsstaub, welcher während des Bremsvorganges entsteht, an der Radfelge 2 ablagert und zu optischen Beeinträchtigungen und gegebenenfalls auch zu Funktionseinschränkungen von Fahrzeugbauteilen führt, wird ein Luftstrom 8 erzeugt, der die an der Bremsung beteiligten Bremsteile überstreicht, also die Scheibenbremse 10 sowie die Bremsbeläge 11, und den entstandenen Bremsstaub einem Filterelement 3 zuführt, das Bestandteil der Bremsstaubaufnahmevorrichtung ist und an dem der Bremsstaub ausgefiltert wird. Die Bremsstaubaufnahmevorrichtung 1 umfasst des Weiteren einen Reinraum 5 auf der Reinseite des Filterelementes 3, der in einem Reinraumgehäuse angeordnet ist und über eine Verbindungsleitung 6 mit einem Venturi-Rohr 4 verbunden ist, welches ebenfalls Bestandteil der Bremsstaubaufnahmevorrichtung 1 ist. Das Venturi-Rohr 4 wird, wie mit den Pfeilen 9 dargestellt, vom Fahrtwind durchströmt und dient dazu, einen im Venturi-Rohr entstehenden Unterdruck dem Reinraum 5 zuzuleiten, so dass dieser Unterdruck auch auf der Reinseite des Filterelementes 3 wirksam ist. Hierdurch entsteht zwischen der Rohseite und der Reinseite des Filterelementes 3 ein Druckabfall, der zur Entstehung des Luftstromes 8 führt. Im Luftstrom 8 wird Außenluft durch Öffnungen (nicht dargestellt) in der Radfelge 2 hindurch in den Innenraum der Radfelge geleitet, der Luftstrom überstreicht wie vorbeschrieben die Bremsteile 10 und 11 und führt schließlich durch das Filterelement 3 in den Reinraum 5 hinein und von dort über die Verbindungsleitung 6 in das Venturi-Rohr 4, über das der Luftstrom 8 gemeinsam mit dem Fahrtwind 9 wieder in die Atmosphäre ausgeleitet wird.

Das Filterelement 3 sitzt auf einem Radlagergehäuse 13 auf, welches karosseriefest angeordnet ist und die rotierende Radachse 12 umgreift. Zwischen der radialen Außenseite des Filterelementes 3 und der Stirnseite der Radfelge 2 ist ein ringförmiges Dichtungselement 15 angeordnet, welches die Rohseite im Inneren der Radfelge 2 strömungsdicht abschließt. Dieses Dichtungselement 15 ist zweckmäßig fest auf der Außenseite des Filterelementes 3 angeordnet. Gegebenenfalls kann das Filterelement 3 auch auf einem Achsschenkel bzw. einem Radträger angeordnet werden.

Die Funktionsweise der Entstehung des Unterdrucks im Venturi-Rohr 4 ist in Fig. 2 dargestellt. Der Fahrtwind 9 wird über die Einströmöffnung 7 in das Venturi-Rohr 4 eingeleitet, das einen sich verjüngenden Abschnitt 4a und daran anschließend einen sich diffusorförmig erweiternden Abschnitt 4b aufweist. Am Anfang des sich diffusorförmig erweiternden Abschnittes 4b entsteht ein Unterdruck im Venturi-Rohr 4, an dieser Stelle mündet auch die Verbindungsleitung 6 in das Venturi-Rohr, die von dem Reinraum 5 auf der Reinseite des Filterelementes 3 abzweigt. Der Unterdruck im Venturi-Rohr 4 sorgt für ein Absaugen des Inhaltes des Reinraumes 5, wodurch der Luftstrom 8 erzeugt wird, der das Filterelement 3 durchströmt und schließlich aus dem Reinraum 5 über die Verbindungsleitung 6 in das Venturi-Rohr 4 eingeleitet wird.

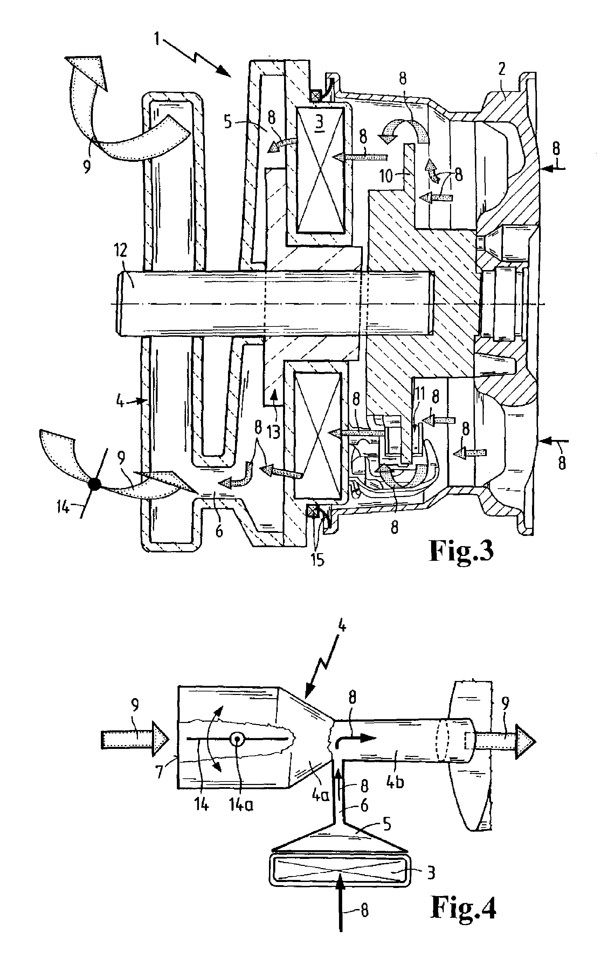

In Fig. 3 und 4 ist ein weiteres Ausführungsbeispiel einer Bremsstaubaufnahmevorrichtung mit einem Filterelement 3 und einem Venturi-Rohr 4 dargestellt. Der Grundaufbau dieser Bremsstaubaufnahmevorrichtung 1 entspricht demjenigen des vorhergehenden Ausführungsbeispieles, jedoch mit dem Unterschied, dass gemäß Fig. 3 und 4 eine zusätzliche Schwenkklappe 14 im Venturi-Rohr 4 vorgesehen ist, die eine Schalteinrichtung zur Einstellung des Stromes durch das Venturi-Rohr und damit des Unterdruckes bildet, der sich in den Reinraum 5 und bis an die Reinseite des Filterelementes 3 fortpflanzt. Die Schwenkklappe 14 ist um eine Schwenkachse 14a zu verdrehen und wird bevorzugt in Abhängigkeit aktueller Zustands- und Betriebsgrößen des Fahrzeuges von einem Aktuator beaufschlagt. Zweckmäßig wird die Schwenkklappe 14 während eines Bremsvorganges in eine den Strömungsquerschnitt im Venturi-Rohr 4 öffnende Position verstellt und nach Beendigung des Bremsvorganges wieder in eine Schließposition versetzt.

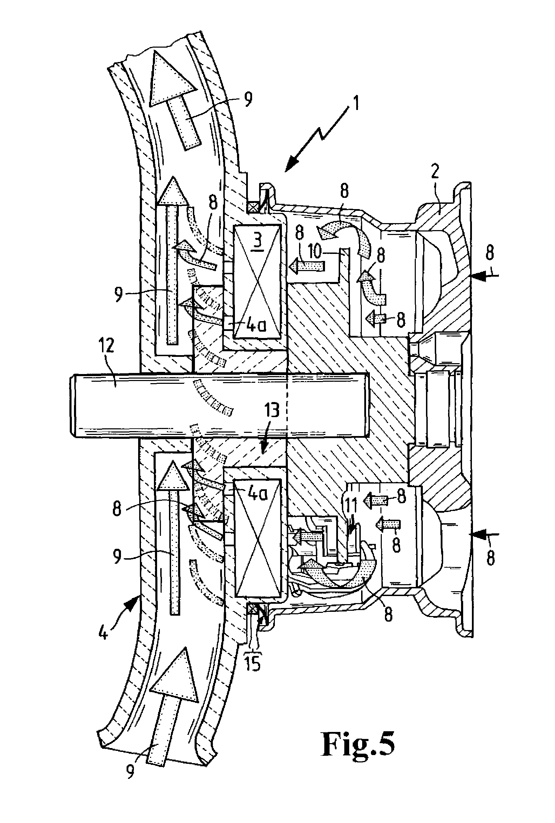

Im Ausführungsbeispiel nach Fig. 5 wird auf einen zusätzlichen Reinraum auf der Reinseite des Filterelementes 3 verzichtet. Vielmehr mündet die Reinseite des Filterelementes 3 unmittelbar in das Venturi-Rohr 4. Hierfür sind in der Wandung des Venturi-Rohres 4 Strömungsöffnungen 4a eingebracht, die die Reinseite des Filterelementes 3 direkt mit dem Inneren des Venturi-Rohres 4 verbinden. Diese Strömungsöffnungen sind in den sich diffusorförmig erweiternden Abschnitt des Venturi-Rohres 4 eingebracht, in welchem im Venturi-Rohr ein Unterdruck herrscht. Der Luftstrom 8, welcher das Filterelement 3 passiert hat, vermischt sich im Venturi-Rohr mit dem Luftstrom 9, der als Teil des Fahrtwindes in das Venturi-Rohr eingeleitet worden ist.

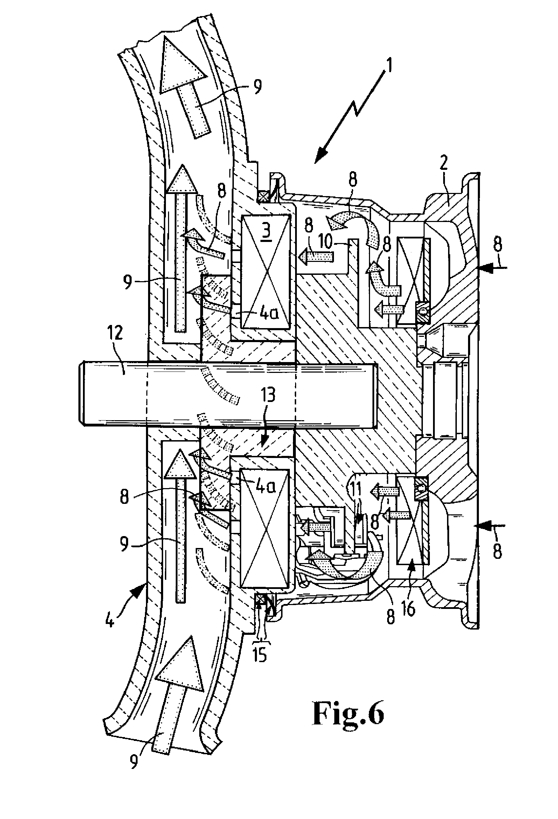

Der Grundaufbau der Bremsstaubaufnahmevorrichtung 1 gemäß Fig. 6 entspricht demjenigen des vorhergehenden Ausführungsbeispieles. In Fig. 6 ist jedoch zusätzlich ein Lüfterrad 16 im Inneren der Radfelge 2 angeordnet, welches einen zusätzlichen Luftstrom 8 in Richtung auf das Filterelement 3 erzeugt bzw. den über den Unterdruck im Venturi-Rohr erzeugten Luftstrom 8 unterstützt. Das Lüfterrad 16 ist drehbar an einem Absatz im Inneren der Radfelge 2 gelagert und weist die gleiche Drehachse wie die Radfelge auf. Die drehbare Lagerung ermöglicht eine Relativdrehbewegung des Lüfterrades 16 in Bezug auf die Radfelge 2. Das Lüfterrad 16 ist mit Lüfterschaufeln versehen, die strömungsgünstig konturiert sind, was einer Bewegung des Lüfterrades 16 zu dem Luftstrom 8 in Richtung auf das Filterelement 3 führt. Das Lüfterrad 16 kann gegebenenfalls auch an einem Absatz der Bremsscheibe 10 drehbar gelagert werden. Außerdem ist es auch möglich, das Lüfterrad 16 oder gegebenenfalls auch nur die Lüfterschaufeln fest und ohne die Möglichkeit einer Relativbewegung an der Radfelge anzuordnen.

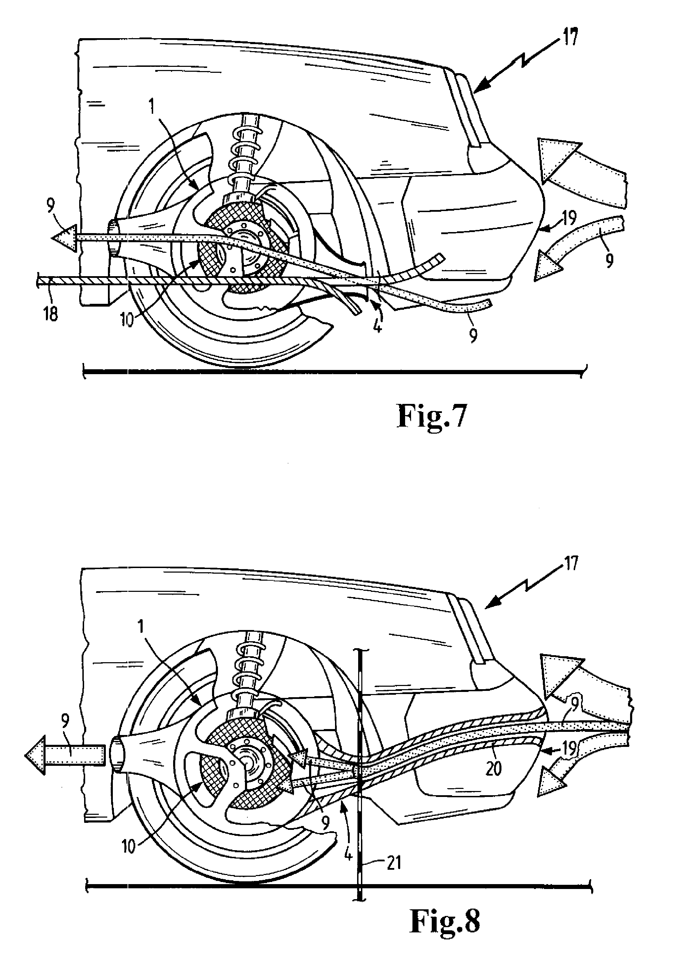

In Fig. 7 ist schematisch die Luftzufuhr zur Bremsstaubaufnahmevorrichtung 1 in einem Kraftfahrzeug 17 dargestellt. Wie mit den Pfeilen 9 eingetragen, wird ein Teil des Fahrtwindes zum Unterboden geleitet und tritt durch eine Öffnung (nicht dargestellt) in einer Unterbodenabdeckung 18 von unten in das Venturi-Rohr 4 ein, in welchem der Unterdruck erzeugt wird, der der Reinseite des Filterelementes in der Bremsstaubaufnahmevorrichtung 1 zugeführt wird.

In Fig. 8 ist ebenfalls ein Kraftfahrzeug 17 dargestellt, bei dem über die Frontseite 19 der Fahrtwind 9 über eine Luftzufuhreinrichtung 20 dem Venturi-Rohr 4 zugeleitet wird. Die Luftzufuhreinrichtung 20 schließt unmittelbar an die Einströmöffnung des Venturi-Rohres 4 an, allerdings sind Luftzufuhreinrichtung 20 und Venturi-Rohr 4 zueinander schwenkbeweglich ausgeführt. Hintergrund ist die Lenkbarkeit der Vorderräder, wodurch auch die fest mit dem Vorderrad verbundenen Bauteile eine entsprechende Drehbewegung ausführen, also auch das Venturi-Rohr 4. Die Luftzufuhreinrichtung 20 ist dagegen karosseriefest im vorderen Bereich des Kraftfahrzeuges 1 angeordnet. Die Trennebene zwischen Luftzufuhreinrichtung 20 und Venturi-Rohr 4 ist mit Bezugszeichen 21 gekennzeichnet.

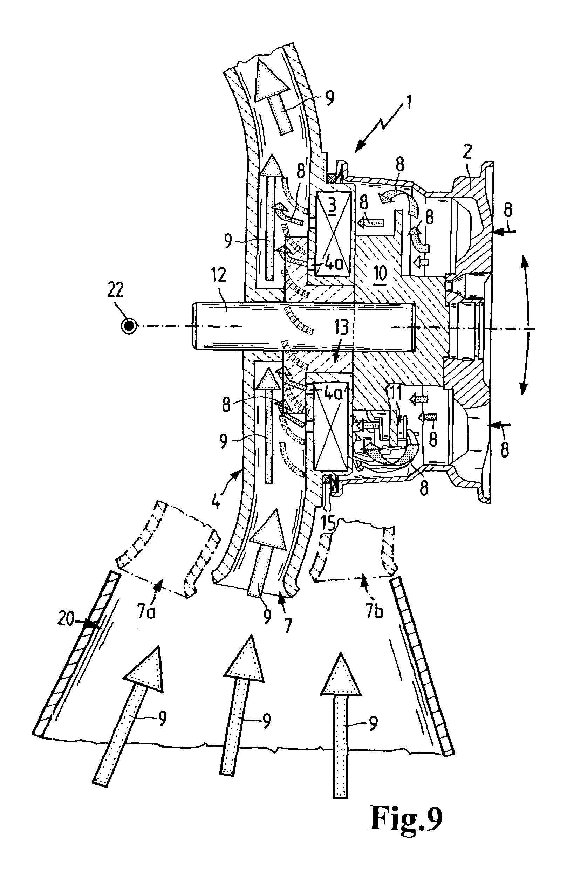

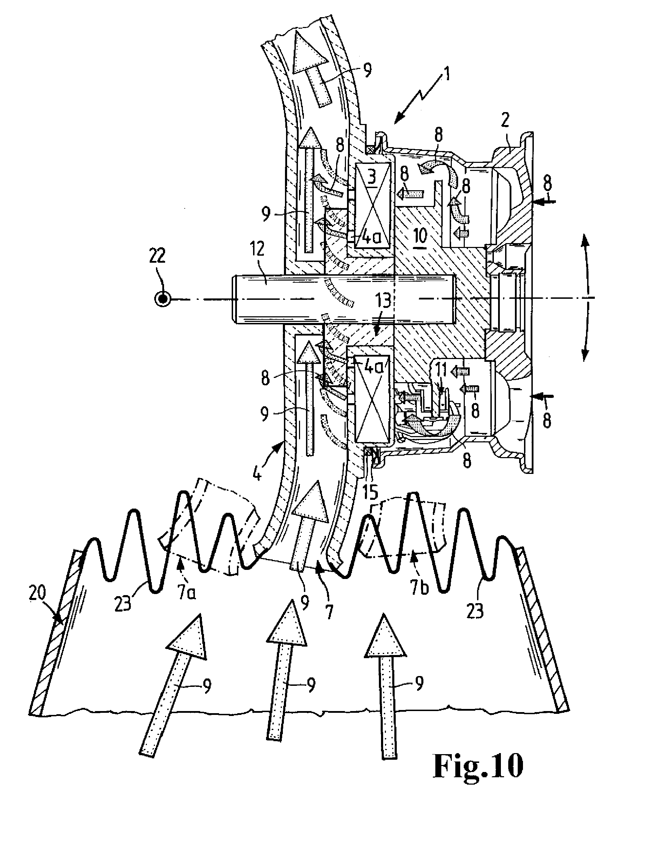

Auch in den Fig. 9 und 10 ist die Schwenkbeweglichkeit der Radfelge 2 einschließlich der Bremsstaubaufnahmevorrichtung 1 relativ zur Luftzufuhreinrichtung 20 dargestellt. Bei einer Lenkbewegung der Vorderräder dreht sich jedes Rad um einen symbolisch eingetragenen Drehpunkt 22. Während dieser Lenkbewegung verbleibt die Luftzufuhreinrichtung 20, über die der Fahrtwind 9 dem Venturi-Rohr 4 zugeführt wird, in seiner karosseriefesten Position. Um sicherzustellen, dass auch bei jedem Lenkwinkeleinschlag eine Luftzufuhr in das Venturi-Rohr über die Luftzufuhreinrichtung 20 gewährleistet ist, ist der dem Venturi-Rohr zugewandte Strömungsausgang der Luftzufuhreinrichtung 20 signifikant größer ausgebildet als die Einströmöffnung 7 am Venturi-Rohr 4. Die Einströmöffnung 7 des Venturi-Rohres befindet sich bei jedem Lenkwinkeleinschlag innerhalb des Strömungsquerschnittes der Luftzufuhreinrichtung 20.

Das Ausführungsbeispiel nach Fig. 10 entspricht im Wesentlichen demjenigen nach Fig. 9, jedoch mit dem Unterschied, dass die Ausströmöffnung der Luftzufuhreinrichtung 20 über ein flexibles Element 23 mit der Einströmöffnung 7 des Venturi-Rohres 4 verbunden ist. Dieses flexible Element 23 sorgt für eine sichere Strömungsverbindung bei sämtlichen Lenkwinkeleinschlägen. Im Ausführungsbeispiel ist das flexible Element 23 als Faltenbalg ausgeführt.

Die Extremstellungen der Einströmöffnung 7 sind in Figur 9 und 10 mit Position 7a bzw. 7b angegeben.

## Patentansprüche

1. Bremsstaubaufnahmevorrichtung für Kraftfahrzeuge, mit einer Luftstromerzeugungseinrichtung zur Erzeugung eines die Bremsteile (10, 11) einer Fahrzeug-Radbremse erfassenden Luftstromes (8), der Bremsstaub der Radbremse einer Staubsammeleinrichtung (3) zuführt, wobei die Luftstromerzeugungseinrichtung ein Venturi-Rohr (4) umfasst, in dem ein Unterdruck erzeugbar ist, der der Staubsammeleinrichtung (3) zuführbar ist, **dadurch gekennzeichnet, dass** die Staubsammeleinrichtung ein Filterelement (3) umfasst und dass der Unterdruck des Venturi-Rohrs (4) die Reinseite des Filterelements (3) beaufschlagt.

2. Bremsstaubaufnahmevorrichtung nach Anspruch 1, **dadurch gekennzeichnet, dass** durch das Venturi-Rohr (4) der Fahrtwind (9) des Kraftfahrzeugs (17) zu leiten ist.

3. Bremsstaubaufnahmevorrichtung nach Anspruch 1 oder 2, **dadurch gekennzeichnet, dass** eine Schalteinrichtung (14) zur Einstellung des dem Filterelement (3) zuzuführenden Unterdrucks vorgesehen ist.

4. Bremsstaubaufnahmevorrichtung nach Anspruch 3, **dadurch gekennzeichnet, dass** über die Schalteinrichtung (14) der Luftstrom (9) durch das Venturi-Rohr (4) zu regulieren ist.

5. Bremsstaubaufnahmevorrichtung nach Anspruch 4, **dadurch gekennzeichnet, dass** die Schalteinrichtung als Schwenkklappe (14) im Venturi-Rohr (4) ausgebildet ist.

6. Bremsstaubaufnahmevorrichtung nach einem der Ansprüche 3 bis 5, **dadurch gekennzeichnet, dass** die Schalteinrichtung (14) in Abhängigkeit aktueller Zustands- und Betriebsgrößen einstellbar ist.

7. Bremsstaubaufnahmevorrichtung nach Anspruch 6, **dadurch gekennzeichnet, dass** die Schalteinrichtung (14) während der Betätigung der Fahrzeug-Radbremse in eine öffnende Position zu schalten ist.

8. Bremsstaubaufnahmevorrichtung nach einem der Ansprüche 1 bis 7, **dadurch gekennzeichnet, dass** die Reinseite des Filterelements (3) in einen Reinraum (5) mündet, der über mindestens eine Strömungsverbindung mit dem Venturi-Rohr (4) verbunden ist.

9. Bremsstaubaufnahmevorrichtung nach einem der Ansprüche 3 bis 5, **dadurch gekennzeichnet, dass** als zusätzliche Luftstromerzeugungseinrichtung mindestens eine rotierbare Lüfterschaufel vorgesehen ist.

10. Bremsstaubaufnahmevorrichtung nach Anspruch 9, **dadurch gekennzeichnet, dass** über den Umfang verteilt mehrere Lüfterschaufeln vorgesehen sind und diese an einem Lüfterring angeordnet sind und gemeinsam mit dem Lüfterring ein Lüfterrad (16) bilden.

11. Bremsstaubaufnahmevorrichtung nach einem der Ansprüche 9 bis 10, **dadurch gekennzeichnet, dass** die Lüfterschaufel auf der Innenseite einer Radfelge (2) bzw. eines mit der Radfelge drehfest gekoppelten Bauteils angeordnet ist.

12. Bremsstaubaufnahmevorrichtung nach Anspruch 11, **dadurch gekennzeichnet, dass** die Lüfterschaufel drehbar oder drehfest an der Radfelge (2) bzw. einem mit der Radfelge gekoppelten Bauteil gelagert ist und die gleiche Drehachse wie die Radfelge aufweist.
